# DEMANDE DE BREVET EUROPEEN

(11) **EP 1 120 935 A1**
(43) Date de publication de la demande: **01.08.2001**
(21) Numéro de dépôt: 01400136.6
(22) Date de dépôt: 18.01.2001
(51) Int. Cl.: H04L 12/10, H04L 12/44

(54) **Procédé de téléalimentation d'un terminal dans un réseau local**

(30) Priorité: 27.01.2000 FR 0001027
(71) Demandeur: ALCATEL, 75008 Paris (FR)
(72) Inventeur: Vergnaud, Gérard, 95130 Franconville, (FR); Laville, Jean-Claude, 92000 Nanterre (FR)
(74) Mandataire: Sciaux, Edmond

(57) **Abrégé**

L'invention propose un procédé pour télé-alimenter un terminal relié à un réseau local par une liaison individuelle, caractérisé en ce qu'il consiste à :
- vérifier qu'aucun terminal n'est actif sur cette liaison, avant de fournir une tension d'alimentation sur cette liaison ;
- et valider la fourniture d'une tension d'alimentation seulement si aucune activité n'a été détectée pendant une durée prédéterminée.

## Description

La présente invention concerne de manière générale un réseau local informatique (Local Area Network en anglais), par exemple de type Ethernet. Plus précisément, l'invention concerne un procédé pour télé-alimenter un terminal dans un tel réseau, ainsi que des dispositifs pour la mise en oeuvre d'un tel procédé.

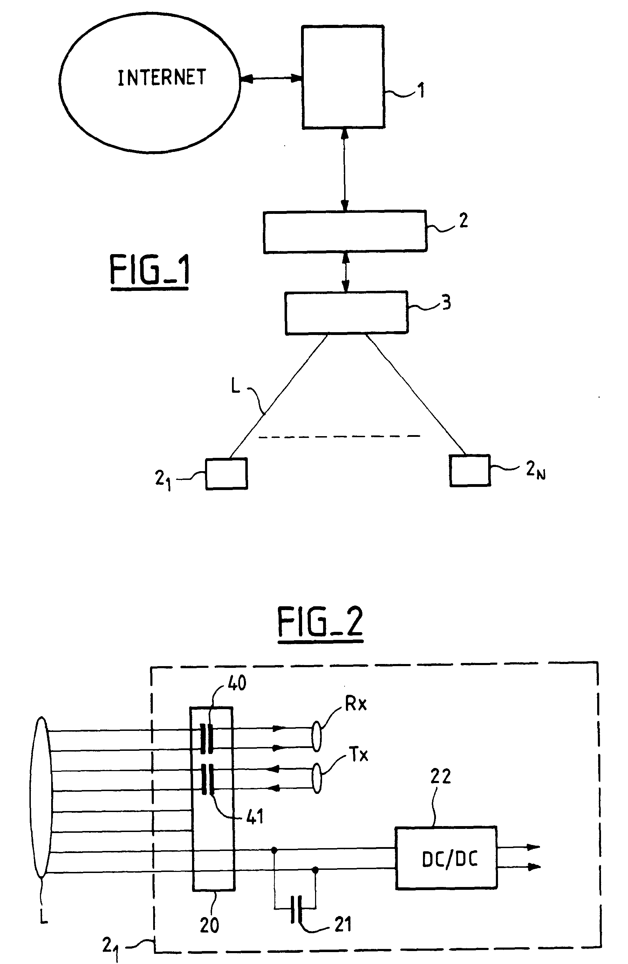

En référence à la Figure 1, et à tire purement indicatif et non limitatif, le réseau local informatique comprend un serveur de réseau local 1, un commutateur 2, un répéteur 3 (« hub » en anglais) et N terminaux 21 à 2N, qui sont, entre autres, des téléphones fonctionnant en mode VolP (« Voice over IP » en anglais, pour « voix par paquets sur protocole IP »). Le serveur de 1 est connecté à un réseau Internet et reçoit des paquets selon le protocole TCP/IP. Les paquets d'une communication donnée sont acheminés à travers le commutateur 2 et le répéteur 3 vers un téléphone, tel que le téléphone 21, ce dernier étant connecté au répéteur à travers une liaison L de type 8 fils, avec connecteurs RJ45.

Classiquement, les terminaux connectés à un réseau (par exemple : ordinateurs personnels, imprimantes, etc...) sont alimentés localement, indépendamment du réseau de communication, par des sources d'alimentation mises à la disposition de l'usager par des sociétés de distribution d'électricité. Des cordons d'alimentation à 110 ou 220 Volts, indépendants des liaisons de données sont donc utilisées pour alimenter les terminaux. Cette solution est à opposer à la solution utilisée classiquement pour alimenter un téléphone, qui consiste à le télé-alimenter par le commutateur du réseau téléphonique auquel il est rattaché.

L'inconvénient de l'alimentation des terminaux par des sources d'alimentation locales est que cette solution multiplie les difficultés du câblage. Elle augmente la difficulté de l'installation du réseau local, en soulevant des problèmes :
- d'encombrement pouvant, en outre, limiter la liberté de mouvement des personnes,
- et de risques électriques.

II est donc souhaitable que certains terminaux reliés à un réseau local informatique soient télé-alimentés, à travers la même liaison que celle utilisée pour transmettre/recevoir des données. Une façon de transmettre une tension de télé-alimentation consiste à utiliser deux des huit fils de la liaison L, quatre autres de ces huit fils étant séparées en deux paires de fils pour respectivement transmettre et recevoir des données. Une autre façon, dite par circuit fantôme, consiste à relier les deux bornes du générateur d'alimentation respectivement aux points milieux d'un transformateur relié à la paire de réception et d'un transformateur relié à la paire d'émission.

Dans les deux cas, télé-alimenter le terminal par le réseau local informatique a pour inconvénient que le répéteur alimente de manière aveugle le terminal. Or la prise d'extrémité RJ45 à laquelle vient se connecter le terminal peut recevoir un terminal d'un type autre qu'un téléphone (ordinateurs personnels, imprimantes, etc...). Il y a un risque d'endommager les circuits électriques de ce terminal. En effet, la prise RJ45 d'un terminal est généralement utilisée de la manière suivante : quatre fils des huit fils sont séparés en deux paires pour respectivement transmettre et recevoir des données, quatre autres fils, inutilisés, étant mis à la masse, souvent par l'intermédiaire d'une combinaison de résistances et de capacités, pour éliminer les éventuels courants de diaphonie induits par les signaux de données circulant dans les quatre premiers fils, et pour réduire les émissions électromagnétiques indésirables. D'autre part, le terminal comporte un transformateur relié à la paire de réception et un transformateur relié à la paire d'émission, ayant chacun un point milieu qui peut être relié à un potentiel de référence via une résistance de faible valeur.

Si on applique une tension d'alimentation relativement élevée, par exemple 48 Volts, sur l'une des paires de ces quatre seconds fils, ou sur les points milieux des transformateurs, l'intensité du courant circulant dans ces résistances de terminaison peut les détruire.

L'invention vise donc à remédier à ce problème en fournissant un procédé pour télé-alimenter un terminal dans un réseau local informatique, ainsi que des dispositifs pour la mise en oeuvre d'un tel procédé, évitant tout risque de dégât si on branche un terminal qui n'est pas un terminal destiné à être télé-alimenté par le réseau.

Un premier objet de l'invention est un procédé pour télé-alimenter un terminal relié à un réseau local par une liaison individuelle, caractérisé en ce qu'il consiste à :
- vérifier qu'aucun terminal n'est actif sur cette liaison, avant de fournir une tension d'alimentation sur cette liaison ;
- et valider la fourniture d'une tension d'alimentation seulement si aucune activité n'a été détectée pendant une durée préderminée.

Un autre objet de l'invention est un dispositif pour télé-alimenter un terminal relié à un réseau local informatique par une liaison individuelle, ce dispositif étant intercalé sur cette liaison ; caractérisé en ce qu'il comprend :
- des moyens vérifier qu'aucun terminal n'est actif sur cette liaison ;
- un générateur de tension d'alimentation ;
- et un élément de commutation commandé par les moyens vérifier qu'aucun terminal n'est actif sur cette liaison, de façon à n'appliquer la tension d'alimentation qu'après avoir vérifié qu'aucun terminal n'est actif sur cette liaison.

Ce dispositif peut être intercalé sur la liaison entre un répéteur classique et un terminal.

Un autre objet de l'invention est un répéteur incorporant par construction un tel dispositif.

D'autres caractéristiques et avantages de la présente invention apparaîtront plus clairement à la lecture de la description qui suit, en référence aux dessins annexés dans lesquels :
- la Figure 1, déjà commentée, montre sous forme schématique l'architecture d'un exemple de réseau local ;
- la Figure 2 représente le schéma synoptique d'un exemple de terminal télé-alimenté par le procédé selon l'invention ;
- la Figure 3 représente le schéma synoptique d'un exemple de répéteur qui comporte un dispositif de téléalimentation d'un terminal, selon l'invention ;
- la Figure 4 représente le schéma de l'exemple de réalisation du dispositif de télé-alimentation d'un terminal, qui est incorporé dans le répéteur représenté sur la figure 2.

En référence à la Figure 2, un terminal 21 télé-alimenté par le procédé selon l'invention comprend typiquement : un séparateur 20, une impédance 21 et un convertisseur continu-continu 22. L'impédance 21 est destiné à permettre de reconnaître que ce terminal est apte à être télé-alimenté. L'impédance 21 est choisie telle qu'elle ne court-circuite pas la tension continue appliquée au convertisseur 22, et qu'elle soit facilement distinguable par rapport aux terminaisons qui sont couramment reliées aux fils libres des prises RJ45 des terminaux. Une telle terminaison comporte typiquement une résistance de 75 ohms en série avec une petite capacité. Le module de son impédance est donc toujours supérieur à 75 ohms. L'impédance 21 et la fréquence du signal de test sont choisis tels que le module de l'impédance 21 soit nettement inférieur à 75 ohms.

Dans l'exemple représenté, l'impédance 21 est constituée d'une capacité de 50 microfarads. Cette capacité peut être constituée par la capacité de filtrage qui se trouve classiquement à l'entrée d'un convertisseur continu-continu, puisque le convertisseur 22 est relié en parallèle sur cette impédance 21.

Le séparateur 20 comprend deux transformateurs 40 et 41. Deux premiers fils de la liaison L sont reliés respectivement à deux entrées du transformateur 40, et deux sorties de ce transformateur 40 fournissent au terminal 21 un signal de réception Rx. Deux fils de transmission d'un signal Tx émis par le terminal 21 sont reliés respectivement à deux entrées du transformateur 41 dont deux sorties sont reliées respectivement à deux seconds fils de la liaison L. Deux autres fils A1, A2, dits d'alimentation, de la liaison L, sont reliés respectivement à deux entrées du convertisseur continu-continu 22 qui alimente le terminal. Ces deux fils reçoivent une tension d'alimentation continue délivrée par le répéteur 3.

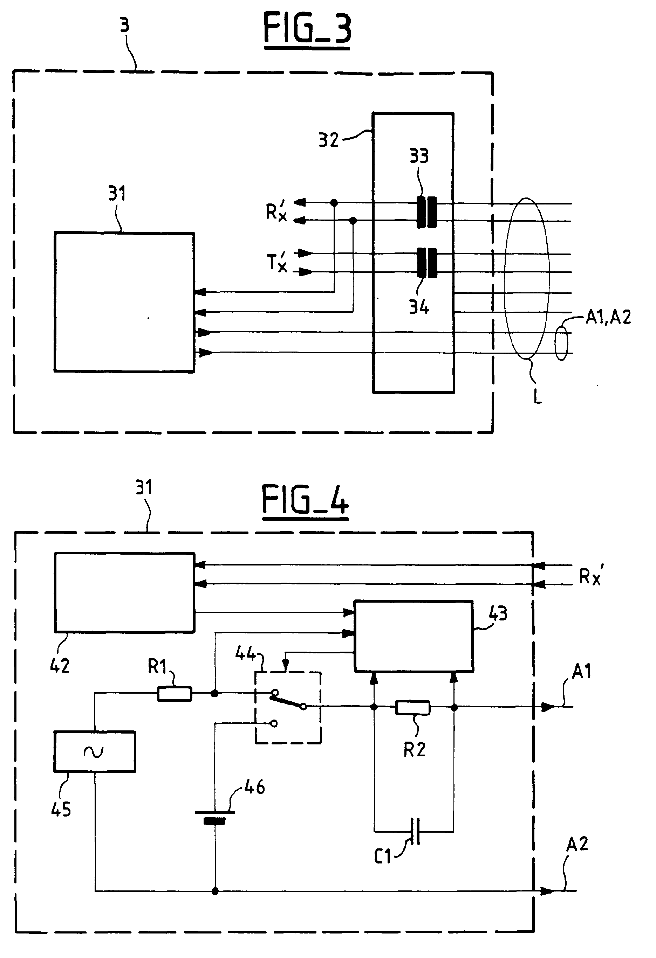

Le répéteur 3, représenté dans la Figure 3, comporte un dispositif 31 de télé-alimentation, et un combineur 32. Ce combineur 32 est analogue à celui représenté sur la Figure 2. Il comprend deux transformateurs 33, 34 pour respectivement recevoir un signal Rx', et émettre un signal Tx'.

Comme montré par la Figure 4, cet exemple de réalisation du dispositif 31 de télé-alimentation selon l'invention comprend :
- un générateur 46 de tension continue, 48V par exemple, destinée à télé-alimenter un terminal, et dont la borne est relié au fil A2 ;
- un générateur 45 de tension alternative de test (fournissant un signal sinusoïdal, de quelques volts, à 10 kilohertz par exemple) , dont une borne est relié au fil A2 et dont l'autre borne est reliée à une première borne d'une résistance R1, de 75 ohms par exemple ;
- un relais 44 ayant un circuit à deux positions : dans une première position ce circuit est relié à la seconde borne de la résistance R1, et dans un seconde position, il est relié à la borne positive du générateur 46 ; ce circuit étant relié au fil A1 via une résistance R2 shuntée par une capacité C1 ;
- un détecteur d'activité 42 ayant : deux entrées reliées respectivement aux deux sorties du transformateur 33, pour recevoir le signal Rx' provenant d'un terminal branché sur la ligne L ; et une sortie ;
- un circuit logique 43 ayant : une première entrée reliée à la sortie du détecteur d'activité 42 ; une deuxième entrée reliée à la seconde borne de la résistance R1 ; deux autres entrées reliées respectivement aux bornes de la résistance R2 et de la capacité C1 ; et une sortie qui commande le relais 44.

Dans cet exemple, R2 = 1 ohm, C1 = 100 microfarads. La valeur de R2 est choisie de façon à définir le courant maximal dans la ligne, et la valeur de C1 est choisie de façon à transmettre le signal alternatif avec une atténuation négligeable.

Lors du démarrage du dispositif 31, le circuit 43 maintient le circuit du relais 44 dans sa première position. La tension d'alimentation n'est donc pas appliquée aux fils A1, A2. Le détecteur 42 vérifie s'il y a une activité sur la paire destinée à la réception du signal Rx' (données) :
- s'il y a une activité, cela signifie qu'il y a un terminal alimenté localement et qu'il ne faut donc pas télé-alimenter ce terminal ; le détecteur 42 inhibe le circuit 43 pour qu'il ne mette pas le circuit du relais 44 dans sa seconde position ;
- s'il n'y a aucune activité, cela signifie qu'il n'y a aucun terminal ou bien qu'il y a un terminal devant être télé-alimenté. Le détecteur 42 valide le circuit 43 pour l'autoriser à mettre le circuit du relais 44 dans sa seconde position, mais cette validation ne suffit pas pour changer effectivement sa position. Il faut tester la présence d'un terminal télé-alimentable.

Tant que le relais 44 est dans sa première position, il relie le fil A1 au générateur de tension alternative 45, via la résistance R1 et la capacité C1. Si un terminal apte à recevoir une télé-alimentation est branché à la ligne L, un courant alternatif de test circule à travers la capacité 21 située dans ce terminal, et fait chuter la tension alternative présente sur la seconde borne de la résistance R1. Le circuit 43 détecte ainsi la présence de ce terminal, bien qu'il n'ait pas encore d'activité. Le circuit 43 commande alors le relais 44 pour le mettre son circuit dans sa seconde position. Le relais 44 relie alors le fil A1 au générateur 46 de tension continue.

Un courant continue circule dans la résistance R2 tant que le terminal est présent sur la ligne L. Le circuit 43 surveille la chute de tension aux bornes de la résistance R2. Si on débranche le terminal, cette chute de tension disparaît. Le circuit 43 conclue qu'il n'y a plus de terminal, et il commande le relais 44 pour remettre son circuit dans sa première position. La tension d'alimentation n'étant plus appliquée entre les fils A1 et A2, un autre terminal quelconque peut donc être branché en toute sécurité.

Selon une variante de réalisation, la tension d'alimentation est transmise par un circuit fantôme en reliant le dispositif 31 à des points milieux des transformateurs 33 e t 34. La tension continue et le signal alternatif de test sont alors appliqués en mode commun sur les deux lignes de transmission. La norme IEEE 802.3 prévoit que ces deux lignes doivent pouvoir supporter 25V jusqu'à 500 kilohertz, en mode commun, par conséquent un signal de test de quelques volts ne perturbe pas la transmission des données utiles.

## Revendications

1. Procédé pour télé-alimenter un terminal (2₁) relié à un réseau local par une liaison individuelle (L), caractérisé en ce qu'il consiste à :
- vérifier qu'aucun terminal n'est actif sur cette liaison, avant de fournir une tension d'alimentation sur cette liaison ;
- et valider la fourniture d'une tension d'alimentation seulement si aucune activité n'a été détectée pendant une durée préderminée.

2. Dispositif (31) pour télé-alimenter un terminal (2₁) relié à un réseau local informatique par une liaison individuelle (L), ce dispositif étant intercalé sur cette liaison ; caractérisé en ce qu'il comprend :
- des moyens (42) vérifier qu'aucun terminal n'est actif sur cette liaison (L) ;
- un générateur de tension d'alimentation (46);
- et un élément de commutation (44) commandé par les moyens (42) vérifier qu'aucun terminal n'est actif sur cette liaison (L); de façon à n'appliquer la tension d'alimentation qu'après avoir vérifié qu'aucun terminal n'est actif sur cette liaison (L).

3. Répéteur pour réseau local, caractérisé en ce qu'il comporte un dispositif selon la revendication 2.
